# EUROPEAN PATENT APPLICATION

(11) **EP 2 500 807 A1**
(43) Date of publication of application: **19.09.2012**
(21) Application number: 11158785.3
(22) Date of filing: 18.03.2011
(51) Int. Cl.: G06F 3/048

(54) **Portable electronic device including touch-sensitive display and method of entering text via virtual keyboard**

(71) Applicant: Research In Motion Limited, Waterloo, ON N2L 3W8 (CA)
(72) Inventor: Earnshaw, Mark, Ottawa Ontario K2K 3K1 (CA); Weng, Jianfeng, Ottawa Ontario K2K 3K1 (CA)
(74) Representative: MERH-IP Matias Erny Reichl Hoffmann

(57) **Abstract**

A method of facilitating input at a portable electronic device having a touch-sensitive display including: when a first portion of a keyboard is displayed in a keyboard area on the touch-sensitive display, detecting a navigation input in a navigation area on the touch-sensitive display; and in response to detecting the navigation input, displaying a second portion of the keyboard; wherein the keyboard area and the navigation area do not overlap.

## Description

### FIELD OF TECHNOLOGY

The present disclosure relates to portable electronic devices including touch-sensitive displays and the control of such portable electronic devices.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

### SUMMARY

In an aspect there is provided, a method of facilitating input at a portable electronic device having a touch-sensitive display, the method including: when a first portion of a keyboard is displayed in a keyboard area on the touch-sensitive display, detecting a navigation input in a navigation area on the touch-sensitive display; and in response to detecting the navigation input, displaying a second portion of the keyboard; wherein the keyboard area and the navigation area do not overlap.

In another aspect there is provided, a portable electronic device including: a touch-sensitive display configured to display information; and a processor connected to the touch-sensitive display to: detect a navigation input on the touch-sensitive display when a first portion of a keyboard is displayed in a keyboard area; and display a second portion of the keyboard in the keyboard area of the touch-sensitive display in response to the navigation input.

### BRIEF DESCRI PTI ON OF THE D RAW INGS

Embodiments of the present disclosure will now be described, by way of example only, with reference to the attached figures, wherein:

FIG. 1 is a simplified block diagram of one example of a portable electronic device in accordance with the present disclosure;

FIG. 2 is a flowchart illustrating an example of a method of controlling an electronic device in accordance with the present disclosure;

FIG. 3 illustrates an example of a portable electronic device displaying a first portion of a keyboard in a keyboard area and receiving input in a navigation area in accordance with the present disclosure;

FIG. 4 illustrates an example of a portable electronic device displaying a second portion of a keyboard in the keyboard area;

FIGS. 5A and 5B illustrate example keyboards;

FIGS. 6A to 6D illustrate further examples of a portable electronic device receiving input in a navigation area in accordance with the present disclosure; and

FIGS. 7 to 9 illustrate examples of portable electronic devices including navigation areas.

### DETAI LED DESCRI PTI ON

The following describes a portable electronic device and method of facilitating input at a portable electronic device having a touch-sensitive display, the method including: when a first portion of a keyboard is displayed in a keyboard area on the touch-sensitive display, detecting a navigation input in a navigation area on the touch-sensitive display; and in response to detecting the navigation input, displaying a second portion of the keyboard; wherein the keyboard area and the navigation area do not overlap.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

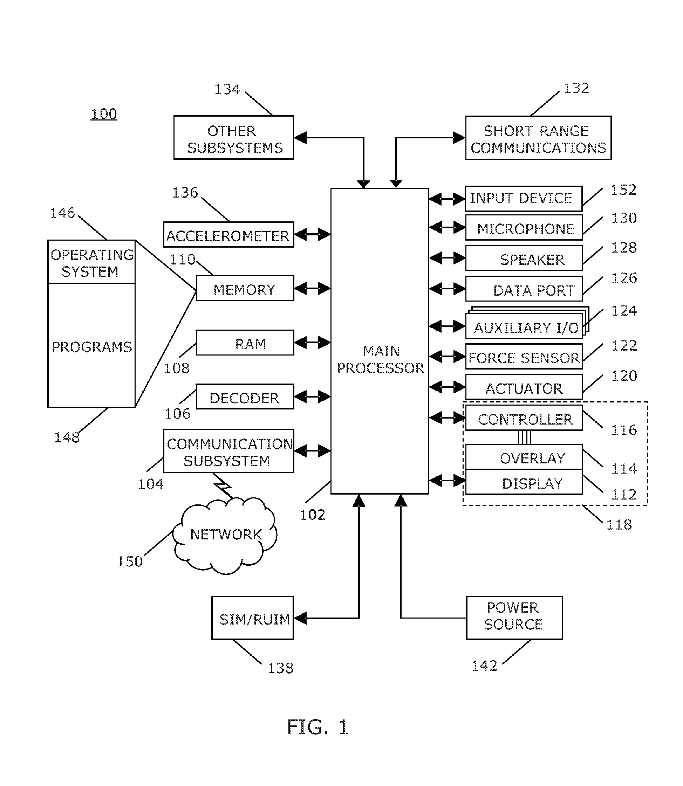

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, an actuator 120, one or more force sensors 122, an auxiliary input/output (I/O) subsystem 124, a data port 126, a speaker 128, a microphone 130, short-range communications 132, and other device subsystems 134. The processor 102 may optionally interact with one or more actuators (not shown) to provide tactile feedback and one or more force sensors (not shown) to detect a force imparted on the touch-sensitive display 118. Interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an orientation sensor such as an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display may include a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The touch-sensitive display 118 is also configured to detect a gesture. A gesture, such as a swipe, is a type of touch, that begins at an origin point and continues to a finishing point while touch contact is maintained. A swipe may be long or short in distance, or duration, or both distance and duration. Two points of the swipe may be utilized to determine a vector that describes a direction of the swipe. The direction may be referenced with respect to the touch-sensitive display 118, the orientation of the information displayed on the touch-sensitive display 118, or another reference. For the purposes of providing a reference, "horizontal" as utilized herein is substantially left-to-right or right-to-left relative to the orientation of the displayed information, and "vertical" as utilized herein is substantially upward or downward relative to the orientation of the displayed information. The origin point and the finishing point of the swipe may be utilized to determine the magnitude or distance of the swipe. The duration of the swipe may be determined from the origin point and finishing point of the swipe in time. The processor 102 receives data from the controller 116 to determine the direction, magnitude, and duration of the swipe. The gesture may be tracked and a plurality of sub-vectors determined for each gesture. The final sub-vector may be utilized to determine a distance and duration of a final portion of the gesture. The processor 102 receives data from the controller 116 to determine the speed of the swipe based on the distance and duration of the final portion of the gesture.

Actuators 120 may be disposed beneath the touch-sensitive display 118 and may be depressed or activated by applying sufficient force to the touch-sensitive display 118 to overcome the actuation force of the actuator 120. The actuators 120 may provide input to the processor 102 when actuated. Actuation of the actuator(s) 120 may result in provision of tactile feedback. Force sensors 122 may work in combination with the actuators to measure an applied force. Force generally refers to force measurements, estimates, and/or calculations, such as pressure, deformation, stress, strain, force density, force-area relationships, thrust, torque, and other effects that include force or related quantities.

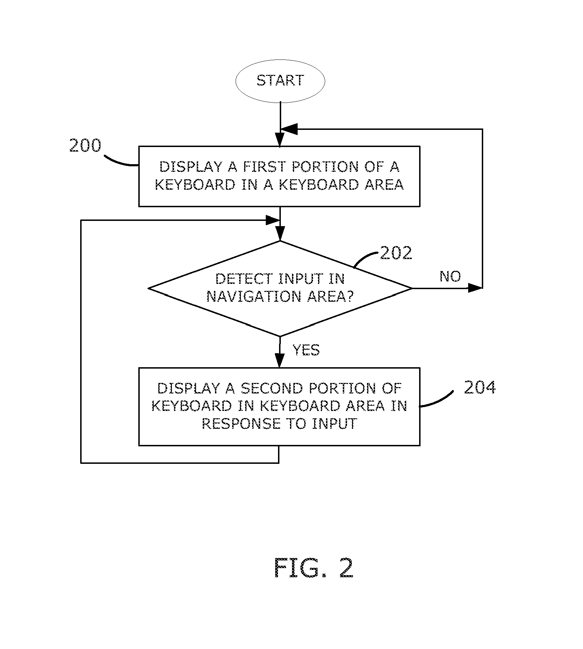

FIG. 2 is a flowchart illustrating an example of a method of facilitating input at a portable electronic device having a touch-sensitive display 118. The method may be carried out by software executed by, for example, the processor 102. Coding of software for carrying out such a method is within the scope of a person of ordinary skill in the art given the present description. The method may contain additional or fewer processes than shown and described, and may be performed in a different order. Computer-readable code executable by, for example, the processor 102 of the portable electronic device 100 to perform the method, may be stored in a computer-readable medium.

According to the method of FIG.2, when a portion of a keyboard is displayed 200 in a keyboard area and an input is detected 202 in a navigation area, another portion of the keyboard is displayed 204 in response to the input at the navigation area. The navigation area and the keyboard area are separate and do not overlap. The navigation area receives navigation input, in the form of touches or gestures, and the keyboard area receives keyboard input in the form of touches. Navigation may not be achieved by interacting with the keyboard area. Similarly, keyboard input may not be achieved by interacting with the navigation area.

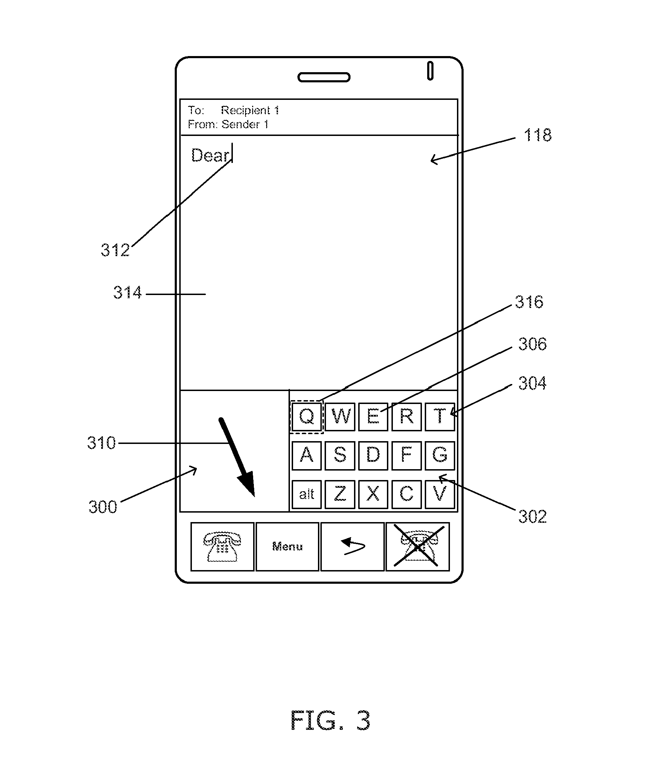

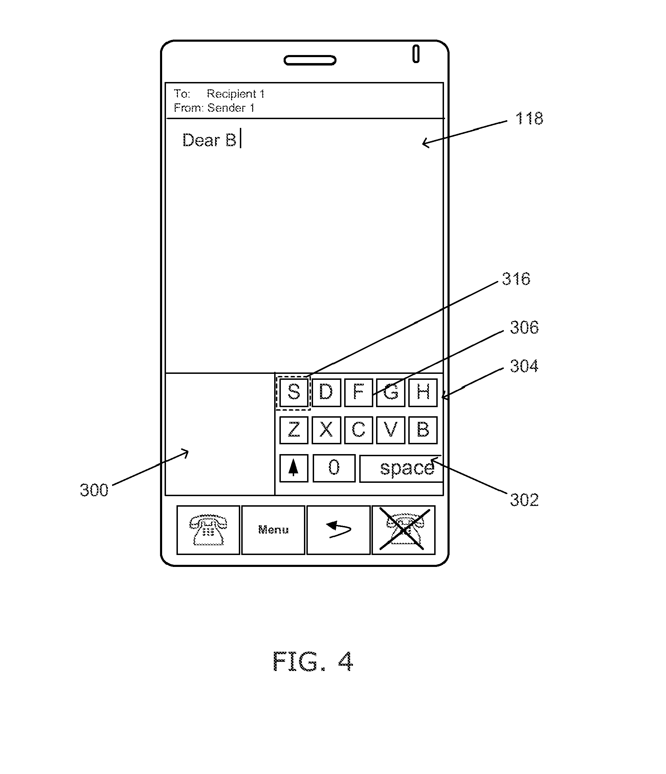

Continued reference is made to FIG. 2 with additional reference to FIGS. 3 and 4 to describe one example of a method of facilitating input at a portable electronic device having a touch-sensitive display 118. In the present example, a messaging application has been launched and a new message is displayed on the touch-sensitive display 118. As shown, a navigation area 300 and keyboard area 302 are displayed side-by-side on a lower portion of the touch-sensitive display 118. The navigation area 300 is sized to receive touch input and the keyboard area 302 is sized to facilitate typing on a virtual keyboard 304.

The navigation area 300 and keyboard area 302 may be continuously displayed on the touch-sensitive display 118 or may be displayed in response to an indicator 312 being located in a text field. In the example of FIGS. 3 and 4, the indicator 312 is located in the message body text field 314 of the new message.

When a portion of the keyboard 304 is displayed, regions on the touch-sensitive overlay 114 are associated with the keys 306. A touch anywhere on a region results in selection of the key 306 associated therewith and entering of the associated character into the text field. The regions may align with the keys 306 of the touch-sensitive display 118 or may be larger or smaller than the keys 306. Because only a portion of the keyboard 304 is displayed at any one time, keys 306 of the keyboard 304 may be displayed in a larger size than would be possible if all of the keys 306 were to be displayed on the touch-sensitive display 118 together. Further, the regions on the touch-sensitive overlay 114 that are associated with the keys 306 may also be larger.

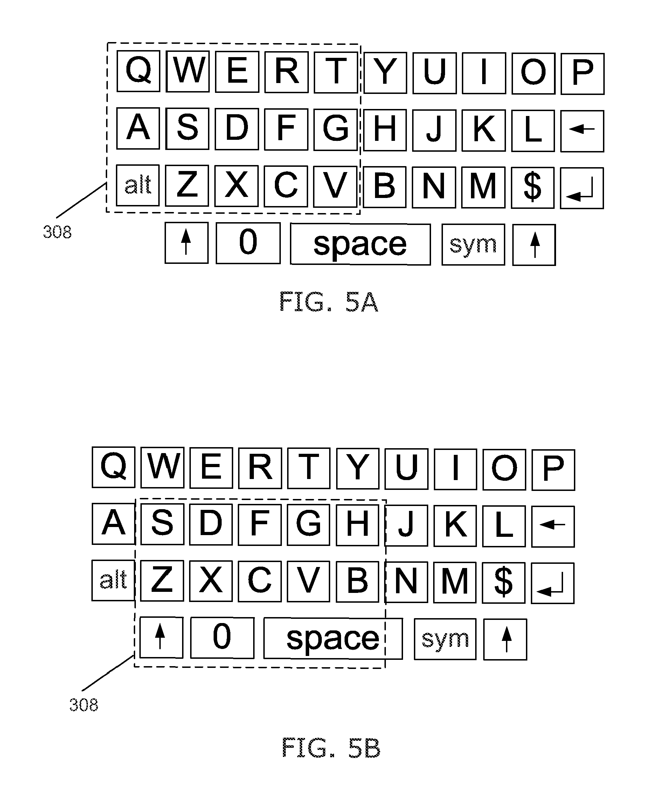

In this example, the keyboard 304 is a QWERTY keyboard, such as the QWERTY keyboard shown in FIGS. 5A and 5B. As shown, a first portion, which corresponds to the top, left portion of the keyboard 304 is displayed 200 in the keyboard area 302. The portion of the keyboard 304 that is displayed in the keyboard area 302 corresponds to the portion of the keyboard that is indicated by reference numeral 308, which is shown for the purpose of this description in FIGS. 5A and 5B.

When typing an email message, for example, characters associated with the regions at which keyboard input is detected on the keyboard area 302 are displayed on the touch-sensitive display 118. As shown in FIG. 3, the characters correspond to the text "Dear". Input in the form of a swipe in the direction indicated by arrow 310 is then detected 202 in the navigation area 300. In response to the input, another portion of the keyboard 304 is displayed 206, as shown in FIG. 4. Further keyboard input is detected in the keyboard area 302 and the character "B", which is associated with a region on the keyboard area 302 at which keyboard input is detected, is displayed following the text "Dear" on the touch-sensitive display 118. The body of the email message may be completed by navigating between keyboard portions using the navigation area 300.

When a different keyboard portion is displayed in the keyboard area 302, the regions on the touch-sensitive overlay 114 that are associated with the keys 306 are associated with different keys 306. For example, region 316, which is shown in dashed line to indicate that the region is not displayed on the touch-sensitive display 118, is associated with key "Q" in FIG. 3 and associated with key "S" in FIG. 4.

In the method of FIG. 2, if the navigation input corresponds to the first portion of the keyboard, the second portion of the keyboard is the same as the first portion of the keyboard. As an example, the navigation input may a swipe that is directed toward a top, left corner of the navigation area. If the top, left portion of the keyboard is currently displayed in the keyboard area, then the top, left portion of the keyboard will continue to be displayed in the keyboard area following detection of the navigation input.

Navigation between keyboard portions may be determined based on a length and duration of a swipe, for example. A short and/or slow swipe may cause the keyboard portion to move one key width in the direction of the swipe, whereas a long and/or fast swipe may cause the keyboard portion to move a greater distance in the direction of the swipe. Alternatively, any swipe may move the keyboard portion one key width in the direction of the swipe so that multiple swipes may be detected before the entire keyboard has been displayed.

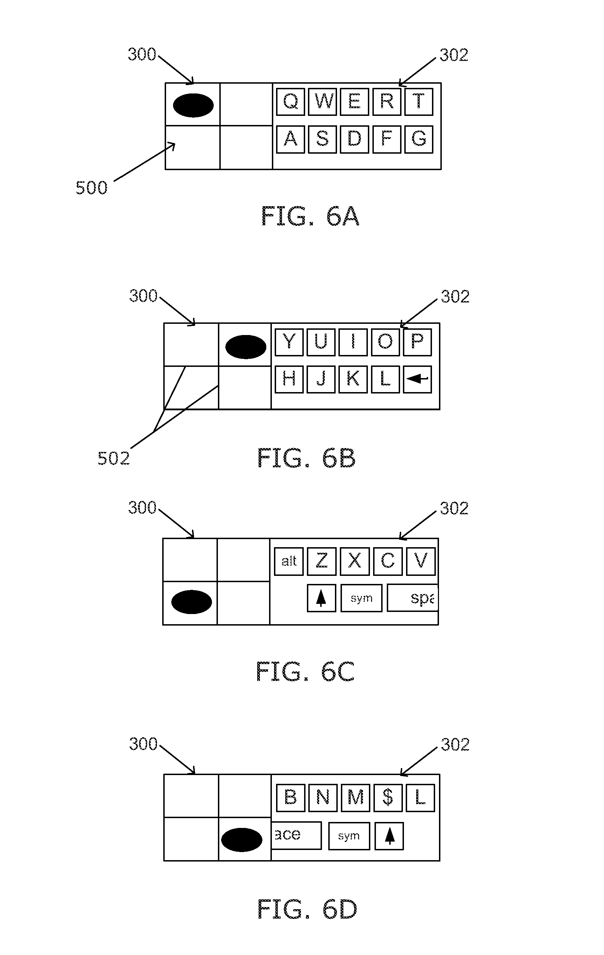

Continued reference is made to FIG. 2 with additional reference to FIGS. 6A, 6B, 6C and 6D to describe another example of a method of facilitating input at a portable electronic device having a touch-sensitive display 118. In the present example, in order to navigate between keyboard portions in the examples of FIGS 6A-6D, the navigation area 300 is divided into quadrants 500, with each quadrant corresponding to generally a quarter of the full keyboard 304. When a first portion of the keyboard 304 is displayed 200 on the keyboard area 302, the processor 102 detects 202 input in the form of a touch in the navigation area 300. In FIG. 6A, the touch is detected in a top, left quadrant. In response to detecting the touch, the processor 102 displays a top, left portion of the keyboard 304 in the keyboard area 302. In FIG. 6B, the touch is detected in a top, right quadrant. In response to detecting the touch, the processor 102 displays a top, right portion of the keyboard 304 in the keyboard area 302. In FIG. 6C, the touch is detected in a bottom, left quadrant. In response to detecting the touch, the processor 102 displays a bottom, left portion of the keyboard 304 in the keyboard area 302. In FIG. 6D, the touch is detected in a bottom, right quadrant. In response to detecting the touch, the processor 102 displays a bottom, right portion of the keyboard 304 in the keyboard area 302.

The navigation area 300 may include lines 502 to indicate quadrant location in order to facilitate correct selection of the desired quadrant. The quadrants of the navigation area 300 may alternatively be provided with different colors in order to distinguish between the quadrants. Displaying lines and/or colors to indicate quadrant location may be a user-modifiable setting.

The navigation area 300 may be configured to detect touch input, gesture input or both. In the example of FIGS. 3 and 4, a touch on the navigation area 300 rather than a swipe may result in display of the quadrant of the keyboard 304 that is associated with the touch location.

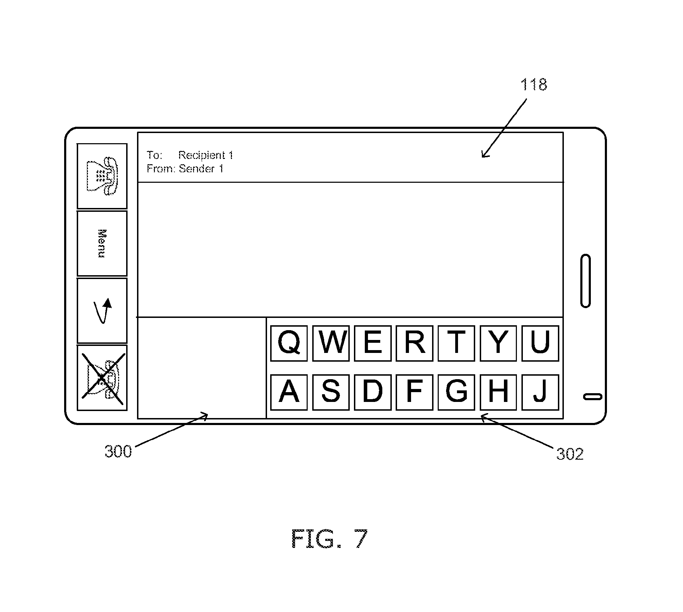

Referring to FIG. 7, an example portable electronic device 100 is shown operating in a landscape mode. As shown, the navigation area 300 and keyboard area 302 are larger than when the portable electronic device 100 is operating in a portrait mode, such as shown in FIG. 3. In this example, the portion of the keyboard is sized to fit in the larger keyboard area 302.

The examples of FIGS. 3 to 7 show the navigation area 300 displayed on a left side of the touch-sensitive display 118 and the keyboard area 302 displayed on a right side of the touch-sensitive display 118. These locations may be switched so that the keyboard area 302 is located on the left side of the touch-sensitive display 118 and the navigation area 300 is located on the right side of the touch-sensitive display 118. The location of the navigation area and the keyboard area may be a user-modifiable setting.

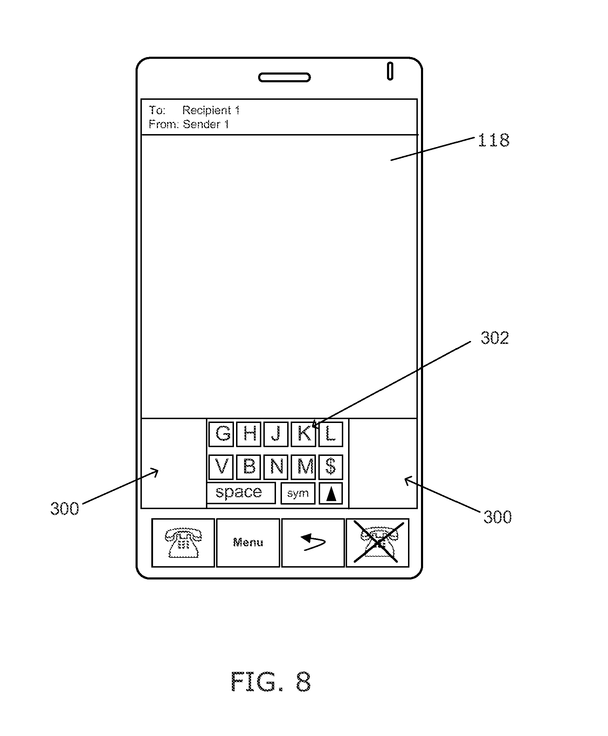

Referring to FIG. 8, in another embodiment, two separate navigation areas 300 are spaced from one another with the keyboard area 302 located therebetween. This embodiment facilitates both left-handed and right-handed navigation between different keyboard portions and left-handed and right-handed keyboard entry.

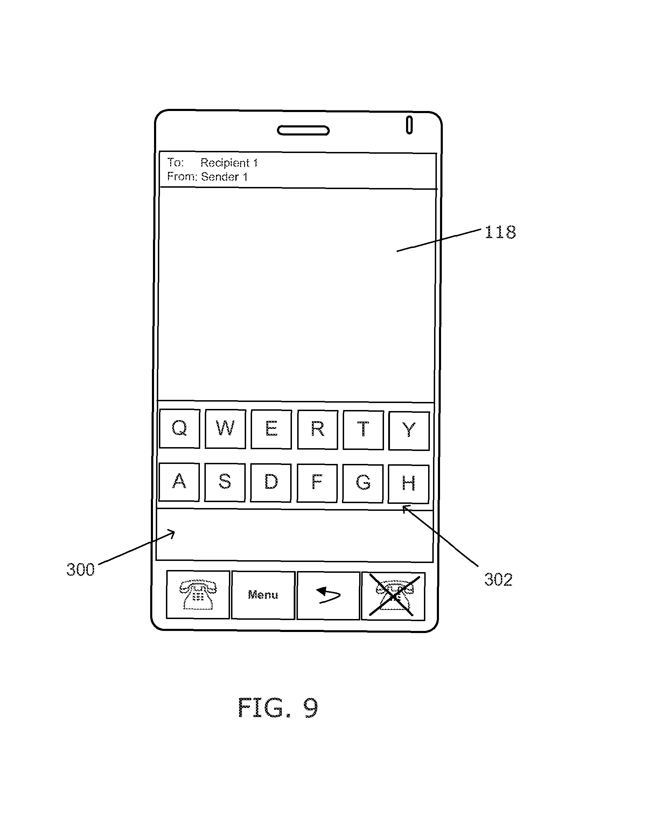

Referring to FIG. 9, in another embodiment, the navigation area 300 is provided at a lower portion of the touch-sensitive display 118 and the keyboard portion 302 is provided above the navigation portion 300. This embodiment facilitates both left-handed and right-handed navigation between different keyboard portions and left-handed and right-handed keyboard entry. The keyboard area 302 in this embodiment is larger than the keyboard area in the embodiment of FIG. 8, which facilitates display of larger keys 306.

In another embodiment, the first and second keyboard portions, when combined, form a full keyboard. The navigation area 300 may function as a switch to toggle the keyboard area 302 between the first portion of the keyboard, which is displayed when no touch is detected, and the second portion of the keyboard, which is displayed when a touch is detected. In this embodiment, the second portion of the keyboard continues to be displayed while the touch in the navigation area 300 is maintained.

Although the keyboard area 302 has been described as displaying a portion of the overall virtual keyboard, some often-selected keys may be continuously displayed in the keyboard area 302. Often-selected keys may include function keys such as: delete, enter/return, shift and space, for example. The often-selected keys may be continuously displayed in the same position in the keyboard area 302 independent from the keyboard portions. For example, the delete key may always be positioned at the top right corner of the keyboard area 302. In one embodiment, the often-selected keys include characters that are determined by a frequency ranking based on past keyboard input by the user.

Although the navigation area 300 and keyboard area 302 have been shown as being adjacent to one another, the navigation area 300 and keyboard area 302 may alternatively be spaced from one another. Further, although the navigation area 300 and keyboard area 302 have been shown as square or rectanglular in shape, both areas 300, 302 may be any shape that facilitates touch and/or gesture input by a user. The keyboard is not limited to being a QWERTY keyboard. The keyboard may be a DVORAK keyboard or another language keyboard such as an AZERTY keyboard, for example.

The method and apparatus described herein facilitates typing on the small touch-sensitive display 118 of a portable electronic device 10. By displaying a portion of a keyboard, the keys 306 may be larger to increase typing accuracy and reduce unintentional key selection.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method of facilitating input at a portable electronic device (100) having a touch-sensitive display (118), the method comprising:
when a first portion of a keyboard (304) is displayed in a keyboard area (302) on the touch-sensitive display (118), detecting a navigation input in a navigation area (300) on the touch-sensitive display (118); and
in response to detecting the navigation input, displaying a second portion of the keyboard (304);
wherein the keyboard area (302) and the navigation area (300) do not overlap.

2. A method as claimed in claim 1, comprising two separate navigation areas (300).

3. A method as claimed in claim 1, wherein the navigation area (300) is adjacent to the keyboard area (302).

4. A method as claimed in any of claims 1 to 3, wherein when the navigation input corresponds to the first portion of the keyboard (304), the second portion of the keyboard (304) is the same as the first portion of the keyboard (304).

5. A method as claimed in any of claims 1 to 4, wherein the navigation area (300) is divided into selectable areas (500) associated with different portions of the keyboard (304).

6. A method as claimed in any of claims 1 to 5, wherein the navigation input is a touch or a gesture.

7. A method as claimed in claim 6, wherein when the touch ends, the first portion of the keyboard (304) is displayed.

8. A method as claimed in any of claims 1 to 7, wherein often-selected keys are continuously displayed in the keyboard area (302) and the first portion of the keyboard (304) and the second portion of the keyboard (304) do not include the often-selected keys.

9. A method as claimed in claim 8, wherein the often-selected keys are function keys.

10. A portable electronic device (100) comprising:
a touch-sensitive display (118) configured to display information; and
a processor (102) connected to the touch-sensitive display (118) to:
detect a navigation input on the touch-sensitive display (118) when a first portion of a keyboard (304) is displayed in a keyboard area (302); and
display a second portion of the keyboard (304) in the keyboard area (302) of the touch-sensitive display (118) in response to the navigation input.

11. A portable electronic device (100) as claimed in claim 10, comprising two separate navigation areas (300).

12. A portable electronic device (100) as claimed in claim 10, wherein the navigation area (300) is adjacent to the keyboard area (302).

13. A portable electronic device (100) as claimed in any of claims 10 to 12, wherein when the navigation input corresponds to the first portion of the keyboard (304), the second portion of the keyboard (304) is the same as the first portion of the keyboard (304).

14. A portable electronic device (100) as claimed in any of claims 10 to 13, wherein the navigation area (300) is divided into selectable areas (500) associated with different portions of the keyboard (304).

15. A portable electronic device (100) as claimed in any of claims 10 to 14, wherein often-selected keys are continuously displayed in the keyboard area (302) and the first portion of the keyboard (304) and the second portion of the keyboard (304) do not include the often-selected keys.

## Amended claims

### Amended claims in accordance with Rule 137(2) EPC.

**1.** A method of facilitating input at a portable electronic device (100) having a touch-sensitive display (118), the method comprising:
when a first portion of a keyboard (304) is displayed in a keyboard area (302) on the touch-sensitive display (118), detecting a navigation input in a navigation area (300) on the touch-sensitive display (118), the navigation area (300) being configured to detect gesture input; and
in to detecting the navigation input, displaying a second portion of the keyboard (304);
wherein the keyboard area (302) and the navigation area (300) do not overlap.

**2.** A method as claimed in clam 1, comprising two separate navigation areas (300).

**3.** A method as dammed in clam 1, the navigation area (300) is adjacent to the keyboard area (302).

**4.** A method as claimed in any of claims 1 to 3, wherein when the navigation input corresponds to the first portion of the keyboard (304), the second portion of the keyboard (304) is the same as the fi rst portion of the keyboard (304).

**5.** A method as claimed in any of claim 1 to 4, wherein the navigation area (300) is divided into selectable areas (500) with different portions of the keyboard (304).

**6.** A method as in any of claims 1 to 5, wherein the navigation area (300) is further configured to detect a touch as navigation input.

**7.** method as claimed in claim 6, wherein when the touch ends, the first portion of the keyboard (304) is displayed.

**8.** A method as claimed in any of claims 1 to 7, wherein often-selected keys are continuously displayed in the keyboard area (302) and the first portion of the keyboard (304) and the second portion of the keyboard (304) do not include the often-selected keys.

**9.** A method as claimed in claim 8, wherein the often-selected keys are function keys.

**10.** A portable electronic device (100) comprising:
a touch-sensitive display (118) configured to display information; and
a processor (102) connected to the touch-sensitive display (118) to:
detect a navigation input in a navigation area (300) configured to detect gesture input on the touch-sensitive display (118) when a first portion of a keyboard (304) is displayed in a keyboard area (302) that does not overlap the navigation area (300); and
display a second portion of the keyboard (304) in the keyboard area (302) of the touch-sensitive display (118) in response to the navigation input.

**11.** A portable electronic device (100) as claimed in claim 10, comprising two separate navigation areas (300).

**12.** A portable electronic device (100) as claimed in claim 10, wherein the navigation a rea (300) is adjacent to the keyboard area (302).

**13.** A portable electronic device (100) as claimed in any of claims 10 to 12, wherein when the navigation input corresponds to the first portion of the keyboa rd (304), the second portion of the keyboard (304) is the same as the first portion of the keyboard (304).

**14.** A portable electronic device (100) as claimed in any of claims 10 to 13, wherein the navigation area (300) is divided into selectable areas (500) associated with different potions of the keyboard (304).

**15.** A portable electronic device (100) as claimed in any of claims 10 to 14, wherein often-selected keys are continuously displayed in the keyboard area (302) and the first portion of the keyboard (304) and the second portion of the keyboard (304) do not include the often-selected keys.
